# EUROPEAN PATENT SPECIFICATION

(11) **EP 3 509 981 B1**
(45) Date of publication and mention of the grant of the patent: **27.03.2024**
(21) Application number: 17849791.3
(22) Date of filing: 12.09.2017
(51) Int. Cl.: B01F 23/232, B01F 23/236, B01F 25/452, B01F 33/05, B01F 33/81, B01F 33/82, B67D 1/04

(54) **METHOD AND APPARATUS FOR INSTANTANEOUS ON-LINE CARBONATION OF WATER THROUGH ELECTROSTATIC CHARGING**
VERFAHREN UND VORRICHTUNG ZUR AUGENBLICKLICHEN ONLINE-KARBONISIERUNG VON WASSER DURCH ELEKTROSTATISCHE AUFLADUNG
PROCÉDÉ ET APPAREIL POUR LA CARBONATATION INSTANTANÉE EN LIGNE DE L'EAU PAR CHARGE ÉLECTROSTATIQUE

(30) Priority: 12.09.2016 US 201662393604 P
(43) Date of publication of application: 17.07.2019
(73) Proprietor: Drinkstation, Inc., Torrance CA 90501 (US)
(72) Inventor: FANTAPPIE, Giancarlo, Rancho Palos Verdes, California 90275 (US); KAMALI, Farshad, Beverly Hills, California 90212 (US); MACRELLINO, Diego, Torrance, California 90503 (US); MIYAMOTO, Joey, Torrance, California 90503 (US)
(74) Representative: Maiwald GmbH
(86) International application number: PCT/US2017/051225
(87) International publication number: WO 2018/049419

(56) References cited:
- WO-A1-01/03817
- WO-A1-2008/125896
- DE-A1-102007 014 611
- DE-A1-102012 102 467
- DE-U1- 20 307 153
- US-A- 5 749 233
- US-A- 6 161 819
- US-B2- 9 107 448

## Description

### CROSS-REFERENCE TO RELATED APPLICATIONS

This application claims priority to U.S. Provisional Patent Application No. 62/393,604, filed September 12, 2016.

### BACKGROUND

DE 203 07 153 U1 describes a device, in accordance with the preamble of claim 1, and a method for enriching gas or gas mixtures in potable water, which make it possible to obtain a uniform gas water mixture while using a minimum amount of assembly space and energy at the preliminary pressure supplied by domestic water pipes.

DE 10 2007 014611 A1 describes a device for continuously mixing gases or gas mixtures in water, comprising a unit for mixing gas and water, and a mixing chamber, which is bounded upstream by a nozzle element having supply lines for water and supply lines for gas, and which is bounded downstream by a sieve unit.

DE 10 2012 102467 A1 describes a device with a continuous mixer that is provided with a liquid stream connector, a gas port connected with carbon dioxide bottle, and a liquid stream discharge port.

The present invention is directed to a method and apparatus for enhancing carbonation of drinking water and drinking beverages, resulting in carbonated water and carbonated drinking beverages (by mixing carbonated water with syrups). Carbonated water and other carbonated drinks are typically formed by combining pressurized chilled water (HQO) and carbon dioxide (CON) within a metal chamber, or in a few cases, instantaneously mixing them on-line, at a point of dispensation.

When the carbonated drink is produced at a beverage production facility, the resulting carbonated beverage is dispensed in bottles, cans, or other containers for distribution. Some beverages are produced with higher level of carbonation than others. Level of carbonation varies from beverage to beverage. The level of carbonation may be a function of consumer taste. It may also be influenced by a desire to maintain the carbonation at a certain level over a period of time. In consideration of the longevity of CO₂ in beverages, it is known that certain PET (Polyethylene Terephthalate) containers (e.g., plastic bottles in which carbonated beverages are contained), leak carbon dioxide from their walls over time, therefore drastically reducing the duration of carbonation in beverages. This happens because, initially the carbonated beverage is kept under pressure, and once a bottle or a can is opened, the carbonation will begin to decrease as carbon dioxide bubbles are dissipated from the beverage very quickly due to atmospheric pressure and at ambient temperature. The same is true with a point- of-use dispenser (e.g., a soda fountain) which combines, at high pressures, the carbon dioxide with the refrigerated water to generate highly carbonated water, and mixes the highly carbonated water with syrups inside the dispensing nozzle (e.g., post-mix dispenser).

It is well known that the solubility of carbon dioxide gas in water is fixed at 25°C and atmospheric pressure. Under these boundary conditions, only a small fraction of CO₂ in water exists as carbonic acid and the majority of CO₂ in water is not converted to acid and remains as CO₂ (aq), i.e., the CO₂ (aq) is not bonded to the water and can rapidly be released from the water. To increase the amount of CO₂ dissolved in water (in the event that sparkling water must be generated) the Food and Beverage Industry as developed a process using water refrigerated, at low temperature, that is mixed with gas under high pressure. In fact, mixing water with carbon dioxide at temperatures lose to water freezing (0°C/32°F), dramatically increases the amount of carbon dioxide (CO₂ aq) that is retained in (chilled) water. By increasing the carbon dioxide gas pressure while mixing it with highly pressurized (chilled) water is an additional step that is commonly used by the Food and Beverage Industry to amplify the carbonation level in beverages. Consequently, when producing carbonated water, low temperatures (close to water freezing, 0°C) and high pressures (over 2757902 Pa (400 pounds per square inch (psi))) of both liquid and gas are the solutions currently used in beverage production plants as well as in point-of-use post-mix beverage dispensers .

In typical carbonated beverages, gas bubbles quickly form when the beverage is dispensed. Under atmospheric pressure and at room temperature, gas (CO₂) bubbles grow inside the water solution until they are quickly released from the surface of the beverage, resulting in a "flat" beverage in relatively short amount of time. In order to produce highly carbonated water suitable for drinking in an open glass, it is necessary to dissolve a larger quantity of carbon dioxide gas in water, and to avoid the gas quickly dissolving in the atmosphere.

The electrical bond between water (H₂O) molecules and the carbon dioxide (CO₂) molecules is understood to be a dominant factor in the ability to maintain the amount of carbon dioxide inside the water (in a form of carbonic acid). This bond assists in allowing sparkling water to retain its carbonation level for a longer period of time after being dispensed. Unfortunately, that bonding between H₂0 and CO₂ molecules is known to be very weak (i.e., water molecules prefer to bond to each other rather than with carbon dioxide molecules). In general, an equilibrium condition exists when a chemical reaction (CO₂/H₂O bonding) and its reverse reaction (CO₂/H₂O separation) occur at equal rates. That equilibrium is typically determined by the partial pressure of CO₂ (gas) on the water.

Both water and carbon dioxide molecules are polarized molecules. As described below, the present invention is directed to a method and apparatus whereby, in addition to the use of conventional (low) temperatures and (high) pressures to provide carbonating, the extended chains of water molecules are broken up, and the natural polarization of the molecules of water and carbon dioxide is also increased to enhance the bonding between water (H₂O) molecules and carbon dioxide (CO₂) molecules. This produces more highly carbonated water, which retains its carbonation level for a more extended period of time.

Enhancing the polarization property of the molecules of water and carbon dioxide allows the molecules to be more readily oriented for greater bonding, particularly in combination with providing a substrate to which the molecules (particularly carbon dioxide molecules may be captured for facilitating bonding activity. The water solution can then be carbonated to a higher level and retain that elevated level of carbonation for a longer time after being dispensed.

By electrostatically charging and orienting the polarizations of the water molecules, and to a lesser extent the carbon dioxide molecules, a greater number of chemical bonds between the two molecules is generated, resulting in higher levels of carbonic acid (H₂CO₃ concentration) is present in the water which, in turn, translates to a lower level of pH in the resulting sparkling water. For example, in pure water the Bjerrum plot shows a pH of 5.7 under atmospheric conditions. By enhancing the orientation of the polarized molecules, more dipole bonds are formed between water and carbon dioxide molecules, resulting in a sparkling water with a pH that can reach 3.6 pH or less, under atmospheric pressure (pCOa = 1 atm). This same low value of pH is equivalent to a level that would normally result at a much higher CO₂ pressure level, i.e., in a Bjerrum plot, to a pCO₂ level exceeding 5 bars.

As described further below, the present invention provides a methodology and apparatus for enhancing the bonding between the carbon dioxide and water molecules by, inter alia, mitigating bonds among the water molecules, polarizing the water molecules and then orienting the water molecules so that carbon dioxide molecules have a higher probability of bonding with the more water molecules.

### BRIEF SUMMARY OF THE INVENTION

Carbonation apparatus, comprising the features of claim 1, is provided for carbonating a mixed input flow of pressurized and refrigerated carbon dioxide and water. A first cartridge is disposed within the carbonation chamber, defining a porous micromesh net in fluid communication with the input flow and a central cavity in fluid communication with the carbonation chamber output port. The micromesh net is configured to break up chains of water molecules passing through the net, to enhance bonding between the water and carbon dioxide molecules within the cartridge. The net also responds to the flow of water and carbon dioxide molecules impacting and passing through the net by generating a passive polarizing field that has a polarizing influence on the water molecules to further enhance. Beads are provided within the cartridge for capturing and stabilizing carbon dioxide molecules to yet further enhance bonding between the water and the carbon dioxide molecules.

Multiple carbonation chambers may be utilized, generally in a serial arrangement.

In one embodiment the carbonation apparatus is implemented as a pair of carbonation chambers, with the first carbonation chamber including a cylindrical micromesh net and the second carbonation chamber including a plurality of beads disposed therein.

In another embodiment both carbonation chambers include an associated micromesh net within the carbonation chamber, with the plurality of beads disposed within the area defined by the micromesh net. The net and the beads may be of similar or different sizes.

In one embodiment the carbonation chambers defining the internal volume of between 2 to 400 cm³.

The micromesh nets may be formed of stainless steel strands, of between 2 to 100 µ in diameter, and defining an open mesh area of between 5 to 800 µ.

In one embodiment the first carbonation chamber includes a cartridge defining a 100 µ micromesh net, housing the 5 mm diameter beads, where the second carbonation chamber includes a cartridge defining a 400 µ mesh net and beads having a diameter between .5 and 3 mm.

The input flow to the carbonation apparatus is expected to be the pressure of approximately 1103161 Pa (160 psi) and a flow of 5.6781 l/min (1.5 gallons per minute (GPM)). The input to the second carbonation chamber may be at a lower pressure of 448159 Pa (65 psi) and a lower flow rate of 4.16394 l/min (1.1 GPM).

A fluid flow compensator may be provided at the output of the carbonation chambers, for reducing the pressure and flow rate from the carbonation chambers to a pressure suitable for dispensation, e.g., a pressure of 103421 Pa (15 psi) and a flow rate of 1.8927 l/min to 3.7854 l/min (.5 to 1 GPM).

### BRIEF DESCRIPTION OF THE DRAWINGS

These and other features and advantages of the various embodiments disclosed herein will be better understood with respect to the following description and drawings, in which like numbers refer and correspond to like parts throughout, and in which:
Figure 1 is a block diagram illustrating an exemplary water carbonation process and system in accordance with one embodiment of the invention;
Figure 2 repeats the block diagram of Figure 1, showing exemplary pressure and flow levels throughout the system and process;
Figure 3 illustrates an exemplary H₂0 and CO₂ mixing apparatus;
Figure 4a illustrates one embodiment of the carbonation chambers;
Figure 4b illustrates a second embodiment of the carbonation chambers;
Figure 5 is an exploded view of the carbonation chamber;
Figure 6a is an exploded perspective view of the carbonation chamber;
Figure 6b is an exploded perspective view of the carbonation chamber with beads disposed with the micromesh netting;
Figures 7a and 7b are views of the mesh filter used in carbonation chamber;
Figure 8 illustrates a first embodiment of the flow compensator;
Figure 9 is a cross-sectional view of the flow compensator shown in Figure 8;
Figure 10 is an end view of the flow compensator shown in Figure 8;
Figures 11 a and 11b are tables of measured carbonation parameters associated with one embodiment of the present invention, in comparison to contemporary carbonation systems and bottled carbonated water;
Figure 12 is a perspective view of a second alternate embodiment of the flow compensator; and
Figure 13 is a top view of the flow compensator shown in Figure 12.

### DETAILED DESCRIPTION

In general, the present invention modifies previously existing techniques and apparatus for the enhancement of carbonation of water or other beverages (i.e. utilizing low temperature and high pressure) with the addition of the techniques and apparatus as described below. Such modified techniques and apparatus are directed toward breaking the molecular structure of water compounds, while orienting polarized molecules of water and carbon dioxide to enhance and multiply the bonds between carbon dioxide and water molecules as described in more detail below. In the described embodiments, the techniques and apparatus are primarily designed and optimized for use in conjunction with a point of use soda/sparkling water dispenser.

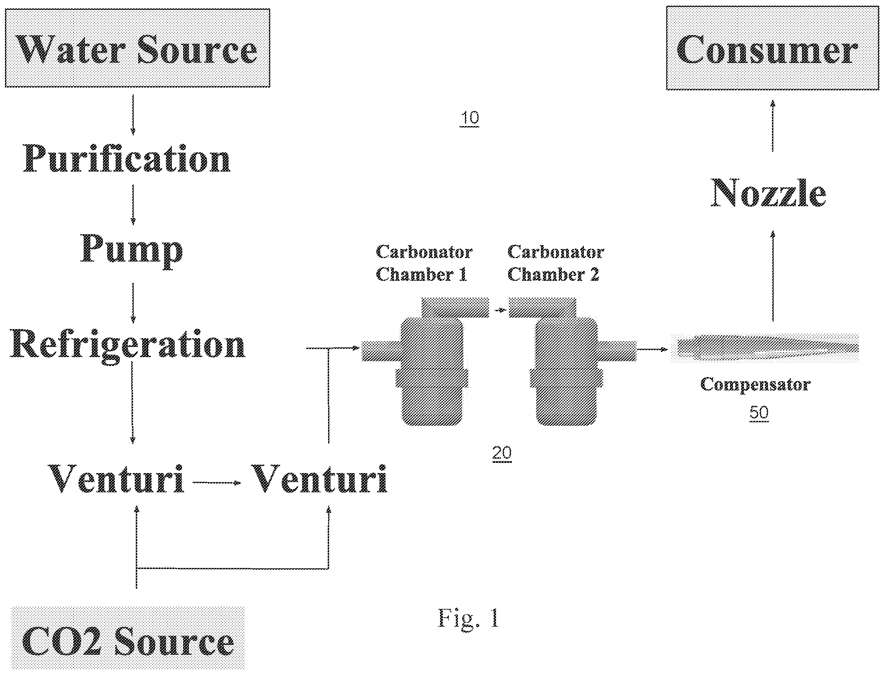

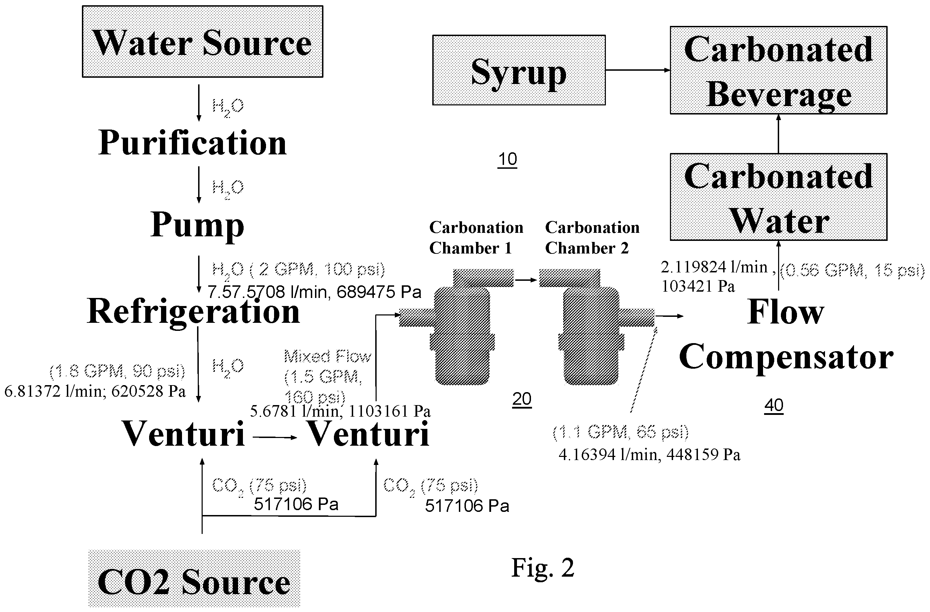

In accordance with the present invention, water is carbonated by the process and using a system generally shown in Figures 1 and 2. Drinking water is brought in from an outside source (water supply) and is purified to minimize the total dissolved solids. Reduction of dissolved solids is also effective to coalesce carbon dioxide bubbles and reduce carbonic acid concentration. Purifying the source water further aids in the mitigation of the bond between the water molecules and the carbon dioxide molecules. The purified water is then pressurized (with a water pump) and refrigerated (inside a refrigerator) to approximately freezing temperature. In the present embodiment, the water pump delivers water at a flow rate between 0.75708 l/min and 18.927 l/min (.2 and 5 GPM).

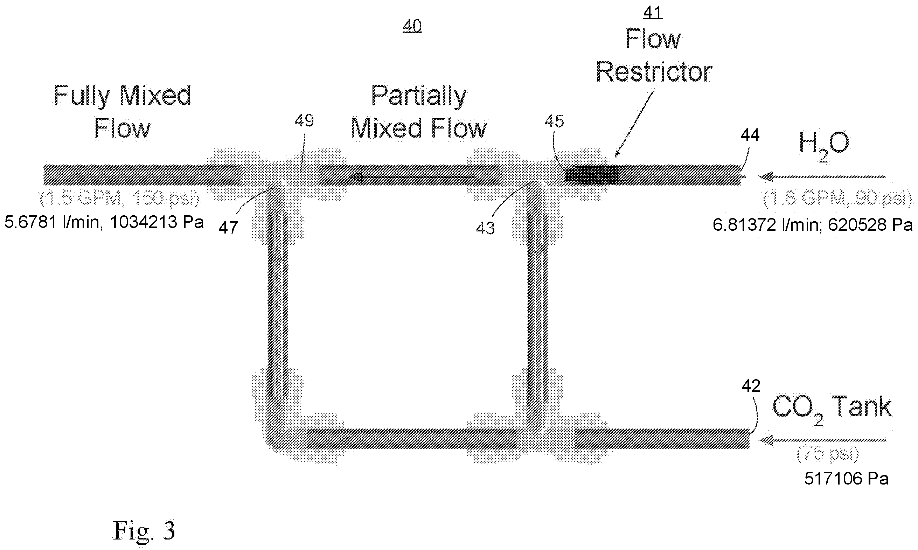

In accordance with the carbonation apparatus 10, shown at Figures 1-3, streams of refrigerated liquid water and carbon dioxide gas under pressure (between 275790 Pa and 689475 Pa (40 and 100 psi)) are then combined in mixing apparatus 40 (shown at Figure 3) that preferably creates an interference at the intersection of the streams, causing the generation of a low-pressure area adjacent the point(s) of merger, which results in a Venturi effect. The Venturi effect enhances the flow of carbon dioxide molecules into the mixing apparatus 40. As shown in Figure 3, one or more (in-line) flow restrictors 41 may be used to create the Venturi effect(s), for enhancing the absorption of the carbon dioxide gas into the flowing water.

Carbon dioxide nozzle(s) 43, 47 and water nozzle(s) 45, 49 are provided at the intersection of the streams and oriented substantially perpendicular to each other, to cause a low-pressure area to be created downstream from the point where the carbon dioxide and water merge. As noted above, the low-pressure area creates a Venturi effect, enhancing the flow of the carbon dioxide and water and facilitating the mixing of the carbon dioxide and water molecules to initial carbonation levels prior to entry into the carbonation chamber(s).

The enhanced mixture of the water and carbon dioxide facilitates the functionality of the carbonation chamber(s) by stabilizing the flow into the first carbonation chamber, avoiding multiple laminar flows that may mitigate the bonding of the water and carbon dioxide molecules in the first carbonation chamber.

In another alternate embodiment, a water supply nozzles 45, 49 and the carbon dioxide supply nozzles 43, 47 are oriented such that one or more of the nozzle(s) (e.g., the carbon dioxide nozzle 43, 47 is oriented to have a leading-edge that substantially coincides with the flow axis from the associated water nozzle 45, 49. That leading-edge may further be rounded and canted away from the flow of the pressurized water to enhance the flow across the face of the canted carbon dioxide nozzle resulting in a more defined low-pressure area. This permits a higher regulation of the Venturi, and therefore the flow, in response to adjustment of the pressure of the water impacting upon the canted carbon dioxide nozzle.

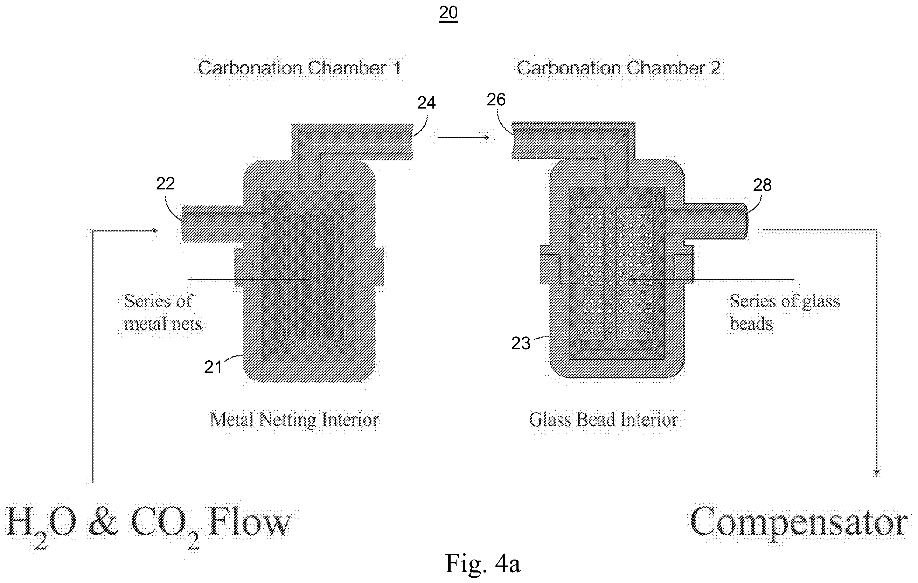

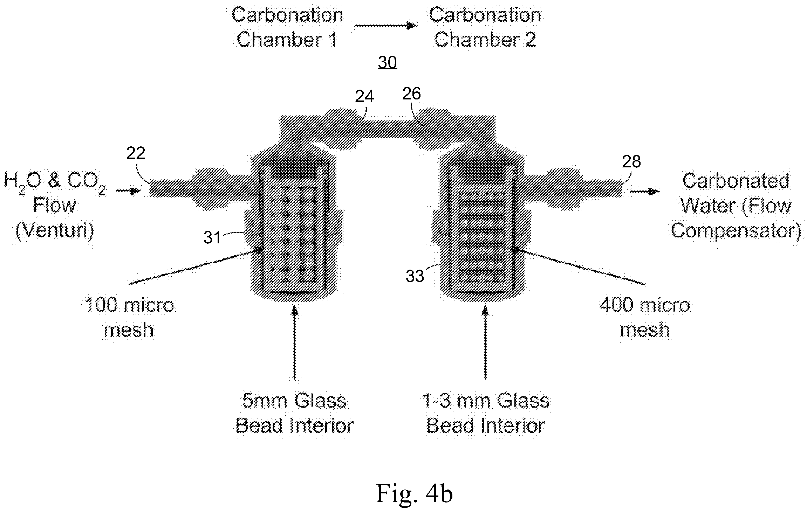

As further shown in Figures 1-3, the mixture of water and gas flowing out of the mixing chambers is then passed through one or more carbonation chambers 20. In various embodiments of carbonation chamber(s), shown more particularly at Figures 4-7, the carbonation chambers function to breakup chains of water molecules; to enhance orientation of the molecules relative to the flow through the carbonation; and to capture molecules in a more stabilized position when they are more available for bonding with other molecules. As described in more detail below, the water molecules may be polarized to be more oriented, e.g., with hydrogen atoms directed in the direction of flow, towards the captured carbon dioxide molecules. This facilitates enhanced bonding between the water and carbon dioxide molecules, producing high levels of carbonation in the water.

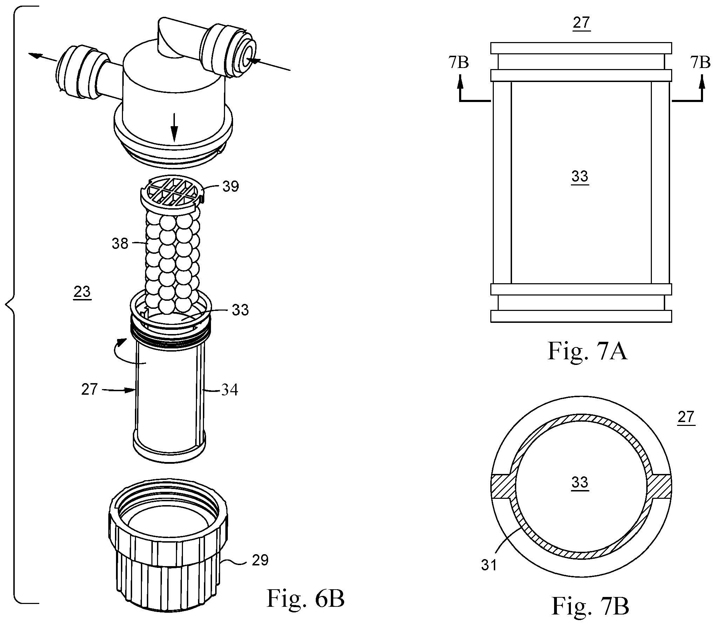

As shown at Figures 4-7, one or more of the carbonization chambers 20 is provided with a metal micromesh net 31, 33 configured and sized to breakup extended chains of molecules, e.g., water molecules, by virtue of physical impact into micro-nesh netting. That breakup produces more water molecules available for bonding with carbon dioxide molecules in the course of the flow, to further enhance bonding between water molecules and carbon dioxide molecules. The molecules may further be directed to a body or array of glass beads (Figure 4b), which may be disposed in the carbonation chamber(s) 31, 33, having a micromesh net, as shown at Figures 4b and 6b, or in a separate chamber, as shown at Figure 4a. The beads include micro irregularities, into which the molecules, particularly the larger carbon dioxide molecules, may become trapped. The carbon dioxide molecules, stabilized on the irregular surface of the beads are then substantially more stationary targets for the smaller water molecules, which may then bond to the carbon dioxide to form carbonic acid, which may then be released into the flow out of the carbonation chamber. The resulting level of bonding between water and stabilized carbonation molecules has been found to be substantially higher than would normally be the case where the water and carbon dioxide molecules are combined by simply pumping carbon dioxide in pressurized, refrigerated water. Moreover, such pumping alone has been found to create a looser form of carbonation, where more carbon dioxide is in an aqueous mixture, i.e., not effectively bonded with the water molecules such that the carbonation more readily dissipates over time.

As noted above, bonding between the carbon molecules and the water molecules may, in accordance with the present invention, be further enhanced by polarization of the molecules, so that the molecules are better oriented for bonding. Such orientation may be done in various ways. In one embodiment of the present invention, orientation of the molecules is effected as a result of a polarized magnetic field passively created on the micromesh grid, as a consequence of the activity of the hydrogen molecules and carbon dioxide molecules as they impact, break up and pass through the micromesh net. Such passive polarization of the micromesh net is understood to result in stripping away electrons from the upstream surface of the micromesh net (e.g., which may be formed of stainless steel), creating a small temporary positive charge on the upstream surface of the net, with a more negative charge on the downstream side of the netting. Such an induced polarization is believed to occur in a manner similar to that which occurs when a glass rod is rubbed with a silk cloth, stripping some electrons from the surface of the glass rod and temporarily giving the glass rod a positive charge.

As the water molecules pass through the micromesh net, the charge on the net is believe to influence water molecules to be oriented with the more positively charged oxygen atom to be oriented towards the net and the less positively charged hydrogen atom to be oriented away from the net, i.e., towards the direction of flow, for bonding with the carbon dioxide molecules in the flow and/or captured and stabilized on the surface of the beads. Such passive polarization, created as a consequence of the interaction of the molecules and the net, thereby enhances the dipole bonding between the water and carbon dioxide molecules.

Alternatively, the micromesh net may be implemented as a pair of concentric nets connected to a voltage source, to provide active polarization of the nets to enhance orientation of the water molecules passing through the net. As will apparent to those of ordinary skill in the art, the particular orientation of current flow through the nets may be implemented in accordance with the desired polarization of the water molecules as they pass through the nets.

As indicated above, the first carbonation chamber may include the micromesh net, through which the input water and gas mix passes, is preferably formed of one or more independent rings of micromesh metal, such as stainless steel. The passage of the carbonated water through the micromesh net, breaks the long molecule compounds of water while creating a weak electrostatic field due to the high-speed passage of more polarized molecules which, within a short period of time (less than one second) the more polarized molecules of the fluid mix (water and carbon dioxide) so the short (broken) chains of water molecules have a higher likelihood of forming dipole to dipole electrostatic connections with the carbon dioxide molecules. In the present embodiment, static electric fields are self-induced by the passage of polarized molecules: creating electrical induction. Other embodiments of the same apparatus may utilize a process in which electric fields are artificially generated externally, through a common DC power supply, or multiple DC power supplies, resulting in highly polarized water and gas molecules that are immediately oriented, in accordance with the electrical filed generated on the net. Whichever is the solution adopted (induced electrical field or artificially generated), the result is high polarization and orientation of the molecules of liquid and gas. In case of passively induced electrical fields, not only does the induced static electric field contribute to the polarization of molecules transiting within, but the polarization itself modifies the electric field that is generated.

Although the electrostatic field herein generated by the passage of polarized molecule is expected to be relatively weak, the resulting increase in the polarization of water molecules increases the likelihood of the formation of bonds between the water molecules and the carbon dioxide molecules. This is because as the degree of polarization of each water molecule is increased the total number of water molecules with a high degree of polarization is increased. By breaking the long chains of molecules and gradually orienting the same, in response to the electrostatic field, there is an increase in the (temporary) formation of carbonic acid inside the water, and the resulting water has been found to be more highly carbonated. In addition, the water molecules have been found to retain a bond with the carbon dioxide molecules that mitigates dispersion of the carbon dioxide molecules, (i.e., bubbling, when the carbonated water is exposed to air during dispensing). As bonds are increased, the carbonization in water is higher and more durable over time, as the carbonated water sits in an open glass or bottle.

The electrostatic field created by the metal mesh tends to align the water molecules with respect to the electrostatic field because of the dipolar character of water molecules. The alignment could lead to longitudinal electrostriction causing water molecules to become denser and include cross-sectional dilation. The longitudinal electrostriction and cross-sectional dilation increases the probability of the partially negative charged water molecules interacting with the carbon dioxide molecules, which possess partially positive charged carbon moieties, and could be present in the system, to form stable carbonic acid molecules.

In the illustrated embodiments, the micro mesh nets are formed of thin stainless-steel strands of approximately 2 to 100 µ in diameter, having an open mesh area of approximately 5 to 800 µ. However, it is anticipated that the micro mesh net may be formed of other materials, and the size of the strands/open mesh areas, may be varied as suited for specific pressure levels, flow rates, desired levels of carbonation and other factors.

When the carbonated water is discharged from the first carbonated chamber, the output is communicated to the second carbonation chamber, where the carbonation level is further enhanced. As noted above, while the first carbonated chamber may or may not include beads, as shown in Figure 3, the second carbonation chamber may further include glass beads having microscopic surface irregularities that can trap water and carbon dioxide molecules (still in the form of (CO₂aq). Such trapping mitigates the activity of the molecules in the carbonated water, particularly the larger carbon dioxide molecules, making it easier for other molecules to combine with the trapped molecules. Highly active water molecules that are trapped on the surface of the irregularities of the glass beads also become more available for bonding with free carbon dioxide molecules, then would be the case if the water molecules were free-flowing in the carbonated water. In accordance with that process the glass beads, having specific diameters (from .5 mm to 5 mm), serve as surface catalysts which work by increasing the percentage of molecular collisions that have the correct orientation to facilitate bonding.

It is anticipated that if 10% of collisions have favorable molecular orientation initially, adding surface catalysts into the flow can increase that to 30%. This means that the rate at which the formation of bonds between water molecules and carbon dioxide molecules will triple (if all other conditions remain the same). This means that the water molecules and carbon dioxide molecules have a substantially greater chance to bond when one of them is more stationary than the other, rather than both moving freely.

In comparison to the water and carbon dioxide molecules, the surface catalyst has a massive amount of surface area relative to the size of the water and carbon dioxide molecules. The seemingly smooth surface of glass beads, is quite bumpy at the atomic scale. That bumpiness, or surface irregularity, serves to capture and therefore stabilize, water molecules. This enhances the ability of water compatible molecules to bond to the captured water molecules.

The surface irregularities in the glass beads may match with, or otherwise be compatible with, the shape or spacing of the carbon dioxide molecules and/or the water molecules. As such, a carbon dioxide molecule, for example, may bump into the surface of the glass bead and stick to it. Once the carbon dioxide is no longer moving freely, the likelihood of a well-oriented collision with a water molecule, i.e., in which the molecule may bond, goes up dramatically. In this way, the surface catalyst helps to produce more carbonic acid and fewer free carbon dioxide molecules, resulting in a carbonation that persists for a much longer lasting period of time.

Once bonded, the impact of other colliding molecules can knock the trapped carbonic acid molecules free of the glass bead surface. The water molecules or carbon dioxide molecules, trapped but unbounded, may similarly be released or knocked free. However, the release of the carbonated molecules is expected to be of minimal significance as another passible molecule will likely be quickly trapped. Once a water molecule and a carbon dioxide molecule are hydrogen bonded to form carbonic acid, they are more easily retained in carbonated water. This leads to a carbonated beverage which stays carbonated for longer and retains the preferred taste profile.

In the presently preferred embodiment, the carbonation apparatus 10 includes two carbonation chambers 20, as depicted in Figures 1 and 2. However, other embodiments may contain a different number of carbonation chambers, e.g., three or more. The carbonation chambers may have various dimensions. In one presently preferred embodiment, each carbonation chamber possesses an internal volume of between 2 and 400 cubic centimeters.

Figure 4 illustrates carbonation apparatus 20, including carbonation chambers 21 and 23. Carbonation chamber 21 defines an interior having a cylindrical micromesh net. Carbonation chamber 23 defines an interior having a plurality of glass beads within the net. In the input flow through carbonation chamber 21 passes through input port 22 and out of output port 24. The flow through carbonation chamber number two passes through input port 26 and out of the output port 28.

The carbonation apparatus 20 shown in Figure 4b includes carbonation chambers 31 and 33. Carbonation chamber 31 defines an interior having a 100 µm micromesh 35 and a plurality of 5 mm glass beads disposed within the carbonation chamber 31. Carbonation chamber 33 defines a 400 µm micromesh net, within which are plurality of 1 to 3 mm glass beads.

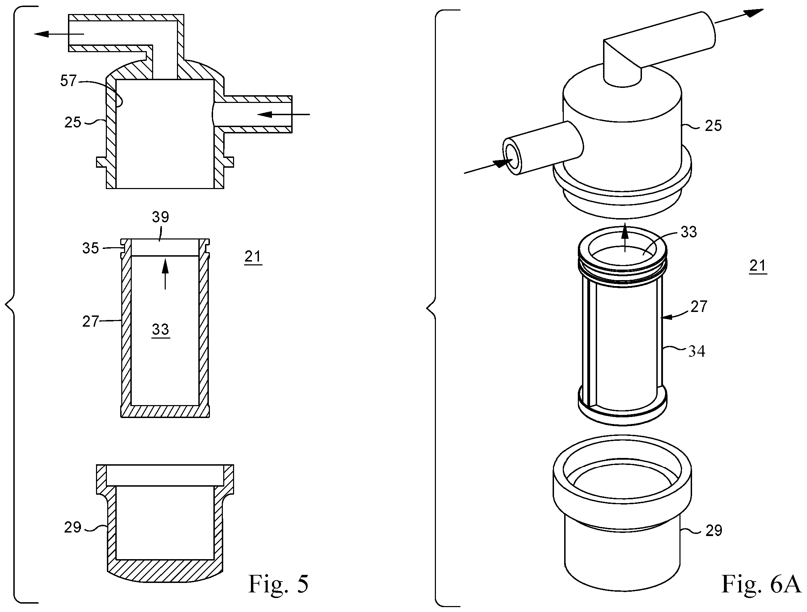

Figures 5 and 6 illustrate an exploded view of exemplary carbonation chamber 23, having a cap portion 25, a base portion 29, and a cartridge 27 disposed within a chamber defined by the cap portion 25 and the base portion 29.

The cartridge 27 defines a micromesh net 34 about the interior chamber 33, in which the glass beads may be disposed. The cartridge 27 is disposed in fluid sealing engagement with the cap 25, by engagement of the sealing member 35 to the side wall 57 of cap 25. As shown at figure 6b, an open grate 39 may be provided at one end of the cartridge 27, to facilitate fluid flow between the interior of the cartridge 27 and the carbonation chamber input port, to facilitate fluid flow through and about the beads.

Fluid flow into and out of the carbonation chambers may be varied to enter or exit the cartridge through the upper port or the side port, as may be illustrated by a comparison of the flow paths in Figures 6a and 6b.

In the presently preferred embodiment, each carbonation chamber, is of substantially cylindrical geometry, as shown at Figures 4-7. Each carbonation chamber defines a hollow cylindrical region into which a cylindrical, micromesh net of metallic material is disposed. Water entering the first carbonation chamber passes through the micromesh nets, and then is communicated to the next (second) carbonation chamber. The first carbonation chamber may or may not include glass beads and second carbonation chamber is expected to include glass beads, as illustrated in Figures 4a, 4b, and 6b. The glass beads are preferably free-floating within the carbonation chamber, inside the micromesh net. The second carbonation chamber may include a similar net as the first carbonation chamber, but preferably with a finer micromesh net and smaller diameter beads, as shown at Figure 4b. The construction and functionality of the carbonation chambers and the flow compensator are described in more detail below.

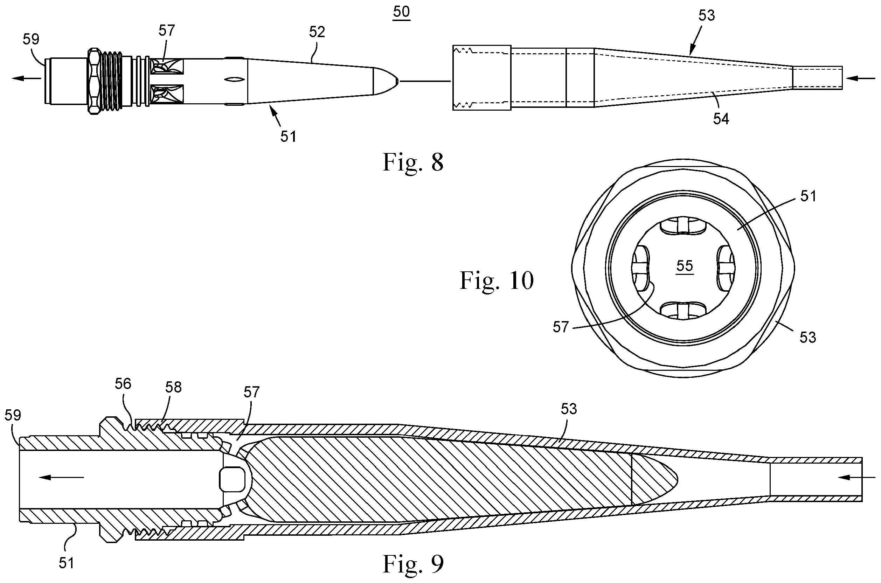

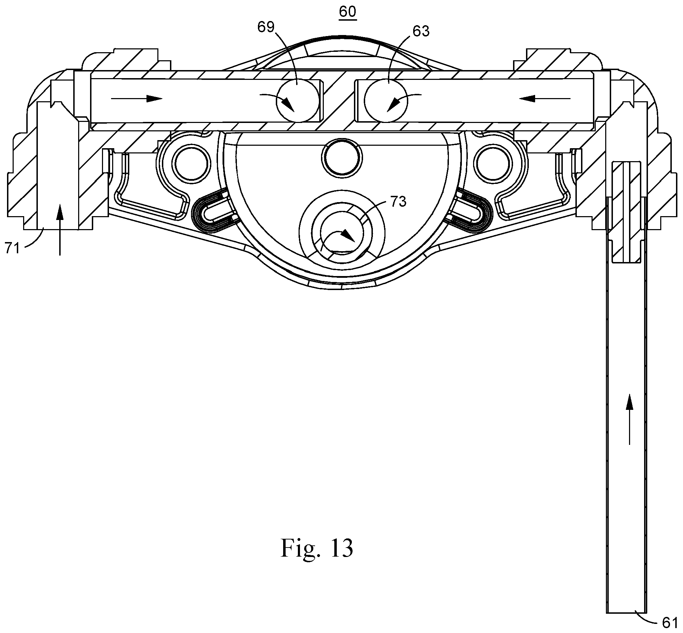

Carbonated water output from the second carbonation chamber may be communicated to a flow compensator, which is further described below. Different embodiments of suitable flow compensators are set forth at Figures 8-10 and 12-13. Alternatively, the flow compensator may be implemented by commercially available apparatus, such as Everpure EV312493 flow compensator or the CM Becker In Line Flow Control Compensator (model number D1235).

The carbonated water output from the second carbonation chamber is typically at a higher level of carbonation than the output from the first carbonation chamber, despite the flow of the molecules remaining substantially indiscriminate. Flow compensators, function to reduce the turbulent flow and increase the semi-laminar flow of the highly carbonated water, instantaneously bringing the pressure of the mixture down to atmospheric pressure. The flow compensator additionally functions to regulate the pressure and flow of the carbonated water to levels suitable for input to a point of use dispenser, e.g., to a pressure of 103421 Pa (15 psi) and a flow rate between 1.8927 l/min to 6.05664 l/min (.5 to 1.6 GPM). Different embodiments of a flow compensator useful in conjunction with the present invention are shown at Figures 8-10 and 12-13.

In the embodiment shown at Figures 8-10, the flow compensator 80 consists of an elongated body 85 having three distinctive elements: (i) first a flow restrictor area 81, immediately followed by (ii) an expansion area 83 having, in most cases, (iii) an aerator element 85. The flow compensator further includes an outer shell 87 into which an elongated body (regulator) is inserted. Carbonated water enters the flow compensator outer shell 87 and flows circumferentially about the extended body 82 by way of a channel that extends between the extended body 82 and the outer shell 87 towards the output 86 of the compensator 80. Rotation of the extended body 82 into the outer shell 87 serves as a variable flow restrictor.

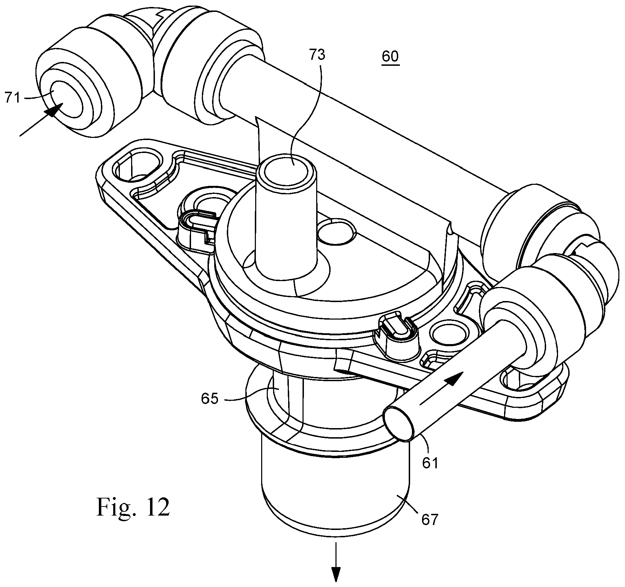

Other embodiments may include a compensator that functions using the same physics principles (reducing the pressure and stabilizing the flow) but with a different geometry. The embodiment shown at Figures 12-13 includes a flow compensator 90 wherein a flow restrictor 91, placed downstream of the carbonation chambers, is followed by an expansion chamber 93 and an aerator 95. The flow compensator 90 may be implemented in the dispensing apparatus, in order to dispense stable flows of sparkling water 92, syrup 94 and/or hot water 96 and dispense them at atmospheric pressure.

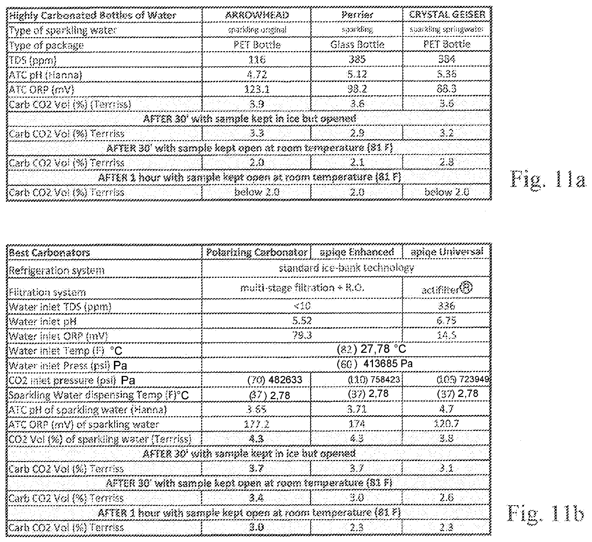

The carbonation levels and other characteristics of the carbonated water output from the flow compensator is described in the chart set forth at Figures 11a and 11b. Those figures compare the output of the carbonated water of the present invention to the output measured from other commercially available dispensing systems, as well as from carbonated water from bottles of selected carbonated water products.

As shown in Figures 11a and 11b, the carbonated water produced in accordance with the present invention exhibits a pH 3.6, at atmospheric pressure, and remains highly carbonated for a longer period of time than has been found to be characteristic of the other commercially available products tested. As such, the carbonation level in the present invention has been found to produce highly carbonated water having a high level of carbonation stability over extended periods of time.

The particulars shown herein are by way of example and are only for purposes of illustrative discussion. They are presented to provide what is believed to be the most useful and readily understood description of the principles and conceptual aspects of the various embodiments of the methodology and apparatus for providing a stabilized, highly carbonated beverage. In this regard, no attempt is made to show any more detail than is necessary to provide a fundamental understanding of the different features of the various embodiments and the descriptions given with the drawings to make apparent to those skilled in the art, how these may be implemented in practice.

As such, the above description is given by way of example and not limitation. Given the above disclosure; it is determined that one who is skilled in the art and trade could devise variations within the scope of the invention as defined by the claims. This would include various ways of enhancing and stabilizing carbon dioxide levels of water. Further, the various features of the embodiments disclosed herein can be used alone, or in varying combinations with each other, as specified in the claims.

## Claims

1. Carbonation apparatus (10) for carbonating a mixed input flow of pressurized and refrigerated carbon dioxide molecules and water molecules, the apparatus comprising:
a) a first carbonation chamber (20, 21) defining an input port (22), an output port (24) and a central chamber, the first carbonation chamber input port being in fluid communication with the mixed input flow;
b) a first cartridge (27) disposed within the central chamber, the first cartridge defining a porous outer surface of a first micromesh net (31, 33) in fluid communication with the first carbonation chamber input port, and a first cartridge central cavity in fluid communication with the first carbonation chamber output port;
c) wherein the first micromesh net (31, 33) material is sized and configured to break up chains of water molecules passing through the first micromesh net to enhance bonding between of water molecules and carbon dioxide molecules within the first cartridge central chamber;
d) wherein the first micromesh net is configured to respond to the flow of water molecules and carbon dioxide molecules impacting upon and passing through the first micromesh net by generating a passive polarizing field that has a polarizing influence on water molecules passing through the first micromesh net, to further enhance bonding between the water molecules and the carbon dioxide molecules within the central chamber;
**characterized in that** it further comprises:
e) a plurality of first beads disposed within the first cartridge (27) central chamber, the plurality of first beads defining an outer surface **characterized by** molecule capturing irregularities formed therein for capturing and stabilizing carbon dioxide molecules on the outer surface thereof to further enhance bonding between water molecules and carbon dioxide molecules within the central chamber.

2. The apparatus as recited in Claim 1 further comprising:
f) a second carbonation chamber (23) defining an input port (26), an output port (28) and a central chamber, the second carbonation chamber input port being in fluid communication with the first carbonation chamber output port;
g) a second cartridge disposed within the central chamber, the second cartridge defining a porous outer surface of a second micromesh net in fluid communication with the second carbonation chamber input port, and a second cartridge central cavity in fluid communication with the second carbonation chamber output port;
h) wherein the second micromesh net is sized and configured to break up chains of water molecules passing through the second micromesh net to enhance bonding between of water molecules and carbon dioxide molecules within the second cartridge central chamber; and
i) wherein the second micromesh net is further formed and configured to define an outer surface that responds to the flow of water molecules and carbon dioxide molecules impacting upon and passing through the second micromesh net by generating a passive polarizing field that has a polarizing influence on water molecules passing through the second micromesh net, to further enhance bonding between the water molecules and the carbon dioxide molecules within the central chamber; and
j) a plurality of second beads disposed within the cartridge central chamber, the second beads defining an outer surface **characterized by** molecule capturing irregularities for capturing and stabilizing carbon dioxide molecules on the bead out surface for further enhanced bonding with water molecules within the central chamber.

3. The apparatus as recited in Claim 1 further comprising:
f) a second carbonation chamber defining an input port, an output port and a central chamber, the second carbonation chamber input port being in fluid communication with the first carbonation chamber output port;
g) a second cartridge disposed within the central chamber, the second cartridge defining a porous outer surface of a second micromesh net in fluid communication with the second carbonation chamber input port, and a second cartridge central cavity in fluid communication with the second carbonation chamber output port;
h) wherein the second micromesh net is sized and configured to break up chains of water molecules passing through the second micromesh net to enhance bonding between of water molecules and carbon dioxide molecules within the second cartridge central chamber; and
i) wherein the second micromesh net is further formed and configured to define an outer surface that responds to the flow of water molecules and carbon dioxide molecules impacting upon and passing through the second micromesh net by generating a passive polarizing field that has a polarizing influence on water molecules passing through the second micromesh net, to further enhance bonding between the water molecules and the carbon dioxide molecules within the central chamber; and
j) a plurality of second beads disposed within the cartridge central chamber, the second beads defining an outer surface **characterized by** molecule capturing irregularities for capturing and stabilizing carbon dioxide molecules on the bead out surface for further enhanced bonding with water molecules within the central chamber.

4. The apparatus as recited in Claim 3 wherein the first and second carbonation chambers (20, 21, 23) define an internal volume of between 2 to 400 cm³.

5. The apparatus as recited in Claim 4 wherein the first and second micromesh nets (31, 33, 34) are formed of stainless steel strands between 2 to 100 µm in diameter.

6. The apparatus as recited in Claim 5 wherein a size of an open mesh area of the first micromesh net is between 5 to 500 µm.

7. The apparatus as recited in Claim 6 wherein a size of an open mesh area of the second micromesh net is between 100 to 800 µm.

8. The apparatus as recited in Claim 7 wherein the first and second beads have a diameter of between .5 to 5 mm; or wherein the first beads have a diameter of 5 mm; preferably wherein the second beads have a diameter of between .5 to 3 mm.

9. The apparatus as recited in Claim 3 wherein the first cartridge defines a 100 µ micromesh net and the first beads define a 5 mm diameter; and wherein the second cartridge defines a 400 µ mesh net and the second beads define a diameter of between .5 to 3 mm.

10. The apparatus as recited in Claim 3 wherein the first carbonation chamber is configured to receive the mixed input flow at-a pressure of 1103161 Pa (160 pounds per square inch (psi)) and at a flow rate of 5.6781 l/min (1.5 gallons per minute (GPM)).

11. The apparatus as recited in Claim 10 wherein the apparatus is configured to provide carbonated water at the second carbonation chamber output port of the second carbonation chamber at a pressure of 448159 Pa (65 psi) and at a flow rate of 4.16394 l/min (1.1 GPM).

12. The apparatus as recited in Claim 3 further comprising a mixing apparatus in fluid communication with the first carbonation chamber input port, the mixing apparatus having a first input port in communication with a source of pressurized and refrigerated water, and a second input port in communication with a source of carbon dioxide, the mixing apparatus being configured to mix the water and carbon dioxide to form the input flow with free water molecules and carbon dioxide molecules in aqueous solution.

13. The apparatus as recited in Claim 12 wherein the first input port of the first mixing apparatus is configured to receive the pressurized and refrigerated water at a pressure of 620528 Pa (90 psi) and a flow rate of 6.81372 l/min (1.8 GPM); preferably wherein the second input port of the mixing apparatus is configured to receive the carbon dioxide at a pressure of 517106 Pa (75 psi).

14. The apparatus of claim 1, wherein the first micromesh net is a metal micromesh net.

15. The apparatus of claim 1, wherein the first micromesh net has a cylindrical configuration.

## Patentansprüche

1. Karbonisierungsvorrichtung (10) zum Karbonisieren eines gemischten Eingangsstroms aus unter Druck stehenden und gekühlten Kohlendioxidmolekülen und Wassermolekülen, wobei die Vorrichtung umfasst:
a) eine erste Karbonisierungskammer (20, 21), die einen Eingangsport (22), einen Ausgangsport (24) und eine mittig angeordnete Kammer definiert, wobei der Eingangsport der ersten Karbonisierungskammer in Strömungsverbindung mit dem gemischten Eingangsstrom steht;
b) eine erste Kartusche (27), die innerhalb der mittig angeordneten Kammer angeordnet ist, wobei die erste Kartusche eine poröse Außenfläche eines ersten Mikromaschennetzes (31, 33) in Strömungsverbindung mit dem Eingangsport der ersten Karbonisierungskammer und einen mittig angeordneten Hohlraum der ersten Kartusche in Strömungsverbindung mit dem Ausgangsport der ersten Karbonisierungskammer definiert;
c) wobei das Material des ersten Mikromaschennetzes (31, 33) so bemessen und eingerichtet ist, dass es Ketten von Wassermolekülen aufbricht, die das erste Mikromaschennetz passieren, um die Bindung zwischen Wassermolekülen und Kohlendioxidmolekülen innerhalb der mittig angeordneten Kammer der ersten Kartusche zu verbessern;
d) wobei das erste Mikromaschennetz so eingerichtet ist, dass es auf den Strom von Wassermolekülen und Kohlendioxidmolekülen, die auf das erste Mikromaschennetz treffen und es passieren, reagiert, indem es ein passives polarisierendes Feld generiert, das einen polarisierenden Einfluss auf Wassermoleküle hat, die das erste Mikromaschennetz passieren, um die Bindung zwischen den Wassermolekülen und den Kohlendioxidmolekülen innerhalb der mittig angeordneten Kammer weiter zu verbessern;
**dadurch gekennzeichnet, dass** das Verfahren des Weiteren umfasst:
e) mehrere erste Kügelchen, die innerhalb der mittig angeordneten Kammer der ersten Kartusche (27) angeordnet sind, wobei die mehreren ersten Kügelchen eine Außenfläche definieren, die **dadurch gekennzeichnet ist, dass** darin moleküleinfangende Unregelmäßigkeiten ausgebildet sind, um Kohlendioxidmoleküle auf ihrer Außenfläche einzufangen und zu stabilisieren, um die Bindung zwischen Wassermolekülen und Kohlendioxidmolekülen innerhalb der mittig angeordneten Kammer weiter zu verbessern.

2. Vorrichtung nach Anspruch 1, des Weiteren umfassend:
f) eine zweite Karbonisierungskammer (23), die einen Eingangsport (26), einen Ausgangsport (28) und eine mittig angeordnete Kammer definiert, wobei der Eingangsport der zweiten Karbonisierungskammer in Strömungsverbindung mit dem Ausgangsport der ersten Karbonisierungskammer steht;
g) eine zweite Kartusche, die innerhalb der mittig angeordneten Kammer angeordnet ist, wobei die zweite Kartusche eine poröse Außenfläche eines zweiten Mikromaschennetzes in Strömungsverbindung mit dem Eingangsport der zweiten Karbonisierungskammer und einen mittig angeordneten Hohlraum der zweiten Kartusche in Strömungsverbindung mit dem Ausgangsport der zweiten Karbonisierungskammer definiert;
h) wobei das zweite Mikromaschennetz so bemessen und eingerichtet ist, dass es Ketten von Wassermolekülen aufbricht, die das zweite Mikromaschennetz passieren, um die Bindung zwischen Wassermolekülen und Kohlendioxidmolekülen innerhalb der mittig angeordneten Kammer der ersten Kartusche zu verbessern; und
i) wobei das zweite Mikromaschennetz des weiteren so ausgebildet und eingerichtet ist, dass es eine Außenfläche definiert, die auf den Strom von Wassermolekülen und Kohlendioxidmolekülen, die auf das zweite Mikromaschennetz treffen und es passieren, reagiert, indem es ein passives polarisierendes Feld generiert, das einen polarisierenden Einfluss auf Wassermoleküle hat, die das zweite Mikromaschennetz passieren, um die Bindung zwischen den Wassermolekülen und den Kohlendioxidmolekülen in der mittig angeordneten Kammer weiter zu verbessern; und
j) mehrere zweite Kügelchen, die innerhalb der mittig angeordneten Kammer der Kartusche angeordnet sind, wobei die zweiten Kügelchen eine Außenfläche definieren, die durch moleküleinfangende Unregelmäßigkeiten gekennzeichnet ist, um Kohlendioxidmoleküle auf der Außenfläche der Kügelchen einzufangen und zu stabilisieren, um die Bindung mit Wassermolekülen innerhalb der mittig angeordneten Kammer weiter zu verbessern.

3. Vorrichtung nach Anspruch 1, des Weiteren umfassend:
f) eine zweite Karbonisierungskammer, die einen Eingangsport, einen Ausgangsport und eine mittig angeordnete Kammer definiert, wobei der Eingangsport der zweiten Karbonisierungskammer in Strömungsverbindung mit dem Ausgangsport der ersten Karbonisierungskammer steht;
g) eine zweite Kartusche, die innerhalb der mittig angeordneten Kammer angeordnet ist, wobei die zweite Kartusche eine poröse Außenfläche eines zweiten Mikromaschennetzes in Strömungsverbindung mit dem Eingangsport der zweiten Karbonisierungskammer und einen mittig angeordneten Hohlraum der zweiten Kartusche in Strömungsverbindung mit dem Ausgangsport der zweiten Karbonisierungskammer definiert;
h) wobei das zweite Mikromaschennetz so bemessen und eingerichtet ist, dass es Ketten von Wassermolekülen aufbricht, die das zweite Mikromaschennetz passieren, um die Bindung zwischen Wassermolekülen und Kohlendioxidmolekülen innerhalb der mittig angeordneten Kammer der ersten Kartusche zu verbessern; und
i) wobei das zweite Mikromaschennetz des weiteren so ausgebildet und eingerichtet ist, dass es eine Außenfläche definiert, die auf den Strom von Wassermolekülen und Kohlendioxidmolekülen, die auf das zweite Mikromaschennetz treffen und es passieren, reagiert, indem es ein passives polarisierendes Feld generiert, das einen polarisierenden Einfluss auf Wassermoleküle hat, die das zweite Mikromaschennetz passieren, um die Bindung zwischen den Wassermolekülen und den Kohlendioxidmolekülen in der mittig angeordneten Kammer weiter zu verbessern; und
j) mehrere zweite Kügelchen, die innerhalb der mittig angeordneten Kammer der Kartusche angeordnet sind, wobei die zweiten Kügelchen eine Außenfläche definieren, die durch moleküleinfangende Unregelmäßigkeiten gekennzeichnet ist, um Kohlendioxidmoleküle auf der Außenfläche der Kügelchen einzufangen und zu stabilisieren, um die Bindung mit Wassermolekülen innerhalb der mittig angeordneten Kammer weiter zu verbessern.

4. Vorrichtung nach Anspruch 3, wobei die erste und die zweite Karbonisierungskammer (20, 21, 23) ein Innenvolumen zwischen 2 und 400 cm³ definieren.

5. Vorrichtung nach Anspruch 4, wobei das erste und das zweite Mikromaschennetz (31, 33, 34) aus Edelstahlsträngen mit einem Durchmesser zwischen 2 und 100 µm gebildet sind.

6. Vorrichtung nach Anspruch 5, wobei eine Größe einer offenen Maschenfläche des ersten Mikromaschennetzes zwischen 5 und 500 µm beträgt.

7. Vorrichtung nach Anspruch 6, wobei eine Größe einer offenen Maschenfläche des zweiten Mikromaschennetzes zwischen 100 und 800 µm beträgt.

8. Vorrichtung nach Anspruch 7, wobei die ersten und die zweiten Kügelchen einen Durchmesser zwischen 0,5 und 5 mm haben; oder wobei die ersten Kügelchen einen Durchmesser von 5 mm haben; wobei die zweiten Kügelchen bevorzugt einen Durchmesser zwischen 0,5 und 3 mm haben.

9. Vorrichtung nach Anspruch 3, wobei die erste Kartusche ein Mikromaschennetz von 100 µ definiert und die ersten Kügelchen einen Durchmesser von 5 mm definieren; und wobei die zweite Kartusche ein Maschennetz von 400 µ definiert und die zweiten Kügelchen einen Durchmesser zwischen 0,5 und 3 mm definieren.

10. Vorrichtung nach Anspruch 3, wobei die erste Karbonisierungskammer so eingerichtet ist, dass sie den gemischten Eingangsstrom bei einem Druck von 1103161 Pa (160 pounds per square inch (psi)) und einer Strömungsrate von 5,6781 l/min (1,5 gallons per minute (GPM)) empfängt.

11. Vorrichtung nach Anspruch 10, wobei die Vorrichtung so eingerichtet ist, dass sie kohlensäurehaltiges Wasser am Ausgangsport der zweiten Karbonisierungskammer mit einem Druck von 448159 Pa (65 psi) und einer Strömungsrate von 4,16394 l/min (1,1 GPM) bereitstellt.

12. Vorrichtung nach Anspruch 3, des Weiteren umfassend eine Mischvorrichtung in Strömungsverbindung mit dem Eingangsport der ersten Karbonisierungskammer, wobei die Mischvorrichtung einen ersten Eingangsport in Strömungsverbindung mit einer Quelle für unter Druck stehendes und gekühltes Wasser und einen zweiten Eingangsport in Strömungsverbindung mit einer Kohlendioxidquelle aufweist, wobei die Mischvorrichtung so eingerichtet ist, dass sie das Wasser und das Kohlendioxid mischt, um den Eingangsstrom mit freien Wassermolekülen und Kohlendioxidmolekülen in wässriger Lösung zu bilden.

13. Vorrichtung nach Anspruch 12, wobei der erste Eingangsport der ersten Mischvorrichtung so eingerichtet ist, dass er das unter Druck stehende und gekühlte Wasser mit einem Druck von 620528 Pa (90 psi) und einer Strömungsrate von 6,81372 l/min (1,8 GPM) empfängt; wobei der zweite Eingangsport der Mischvorrichtung bevorzugt so eingerichtet ist, dass er das Kohlendioxid mit einem Druck von 517106 Pa (75 psi) empfängt.

14. Vorrichtung nach Anspruch 1, wobei das erste Mikromaschennetz ein Metall-Mikromaschennetz ist.

15. Vorrichtung nach Anspruch 1, wobei das erste Mikromaschennetz eine zylindrische Konfiguration aufweist.

## Revendications

1. Appareil de carbonatation (10) pour la carbonatation d'un flux d'entrée mélangé de molécules de dioxyde de carbone et de molécules d'eau pressurisées et réfrigérées, l'appareil comprenant :
a) une première chambre de carbonatation (20, 21) définissant un orifice d'entrée (22), un orifice de sortie (24) et une chambre centrale, l'orifice d'entrée de la première chambre de carbonatation étant en communication fluidique avec le flux d'entrée mélangé ;
b) une première cartouche (27) disposée à l'intérieur de la chambre centrale, la première cartouche définissant une surface extérieure poreuse d'un premier filet micromaille (31, 33) en communication fluidique avec l'orifice d'entrée de la première chambre de carbonatation, et une cavité centrale de première cartouche en communication fluidique avec l'orifice de sortie de la première chambre de carbonatation ;
c) dans lequel le premier filet micromaille (31, 33) est dimensionné et configuré pour briser les chaînes de molécules d'eau qui passent à travers le premier filet micromaille afin d'améliorer la liaison entre les molécules d'eau et les molécules de dioxyde de carbone à l'intérieur de la chambre centrale de première cartouche ;
d) dans lequel le premier filet micromaille est configuré pour réagir au flux de molécules d'eau et de molécules de dioxyde de carbone impactant et passant à travers le premier filet micromaille en générant un champ polarisant passif qui a une influence polarisante sur les molécules d'eau passant à travers le premier filet micromaille, afin d'améliorer encore la liaison entre les molécules d'eau et les molécules de dioxyde de carbone à l'intérieur de la chambre centrale ;
**caractérisé en ce qu'**il comprend en outre :
e) une pluralité de premières billes disposées à l'intérieur de la chambre centrale de première cartouche (27), la pluralité de premières billes définissant une surface extérieure **caractérisée par** des irrégularités de capture de molécules formées dans celle-ci pour capturer et stabiliser les molécules de dioxyde de carbone sur leur surface extérieure afin d'améliorer encore la liaison entre les molécules d'eau et les molécules de dioxyde de carbone à l'intérieur de la chambre centrale.

2. Appareil selon la revendication 1, comprenant en outre :
f) une seconde chambre de carbonatation (23) définissant un orifice d'entrée (26), un orifice de sortie (28) et une chambre centrale, l'orifice d'entrée de la seconde chambre de carbonatation étant en communication fluidique avec l'orifice de sortie de la première chambre de carbonatation ;
g) une seconde cartouche disposée à l'intérieur de la chambre centrale, la seconde cartouche définissant une surface extérieure poreuse d'un second filet micromaille en communication fluidique avec l'orifice d'entrée de la seconde chambre de carbonatation, et une cavité centrale de seconde cartouche en communication fluidique avec l'orifice de sortie de la seconde chambre de carbonatation ;
h) dans lequel le second filet micromaille est dimensionné et configuré pour briser les chaînes de molécules d'eau passant à travers le second filet micromaille afin d'améliorer la liaison entre les molécules d'eau et les molécules de dioxyde de carbone à l'intérieur de la chambre centrale de seconde cartouche ; et
i) dans lequel le second filet micromaille est en outre formé et configuré pour définir une surface extérieure qui réagit au flux de molécules d'eau et de molécules de dioxyde de carbone impactant et passant à travers le second filet micromaille en générant un champ polarisant passif qui a une influence polarisante sur les molécules d'eau passant à travers le second filet micromaille, afin d'améliorer encore la liaison entre les molécules d'eau et les molécules de dioxyde de carbone à l'intérieur de la chambre centrale ; et
j) une pluralité de secondes billes disposées dans la chambre centrale de cartouche, les secondes billes définissant une surface extérieure **caractérisée par** des irrégularités de capture de molécules pour capturer et stabiliser les molécules de dioxyde de carbone sur la surface extérieure des billes afin d'améliorer encore la liaison avec les molécules d'eau à l'intérieur de la chambre centrale.

3. Appareil selon la revendication 1, comprenant en outre :
f) une seconde chambre de carbonatation définissant un port d'entrée, un port de sortie et une chambre centrale, le port d'entrée de la seconde chambre de carbonatation étant en communication fluidique avec le port de sortie de la première chambre de carbonatation ;
g) une seconde cartouche disposée à l'intérieur de la chambre centrale, la seconde cartouche définissant une surface extérieure poreuse d'un second filet micromaille en communication fluidique avec le port d'entrée de la seconde chambre de carbonatation, et une cavité centrale de seconde cartouche en communication fluidique avec le port de sortie de la seconde chambre de carbonatation ;
h) dans lequel le second filet micromaille est dimensionné et configuré pour briser les chaînes de molécules d'eau passant à travers le second filet micromaille afin d'améliorer la liaison entre les molécules d'eau et les molécules de dioxyde de carbone à l'intérieur de la chambre centrale de seconde cartouche ; et
i) dans lequel le second filet micromaille est en outre formé et configuré pour définir une surface extérieure qui réagit au flux de molécules d'eau et de molécules de dioxyde de carbone impactant et passant à travers le second filet micromaille en générant un champ polarisant passif qui a une influence polarisante sur les molécules d'eau passant à travers le second filet micromaille, afin d'améliorer encore la liaison entre les molécules d'eau et les molécules de dioxyde de carbone à l'intérieur de la chambre centrale ; et
j) une pluralité de secondes billes disposées à l'intérieur de la chambre centrale de cartouche, les secondes billes définissant une surface extérieure **caractérisée par** des irrégularités de capture de molécules pour capturer et stabiliser les molécules de dioxyde de carbone sur la surface extérieure des billes afin d'améliorer encore la liaison avec les molécules d'eau à l'intérieur de la chambre centrale.

4. Appareil selon la revendication 3, dans lequel les première et seconde chambres de carbonatation (20, 21, 23) définissent un volume interne compris entre 2 et 400 cm³.

5. Appareil selon la revendication 4, dans lequel les premier et second filets micromaille (31, 33, 34) sont formés de fils d'acier inoxydable d'un diamètre compris entre 2 et 100 µm.

6. Appareil selon la revendication 5, dans lequel la taille d'une zone de maille ouverte du premier filet micromaille est comprise entre 5 et 500 µm.

7. Appareil selon la revendication 6, dans lequel la taille de la zone de maille ouverte du second filet micromaille est comprise entre 100 et 800 µm.

8. Appareil selon la revendication 7, dans lequel les première et secondes billes ont un diamètre compris entre 0,5 et 5 mm ; ou dans lequel les premières billes ont un diamètre de 5 mm ; de préférence dans lequel les secondes billes ont un diamètre compris entre 0,5 et 3 mm.

9. Appareil selon la revendication 3, dans lequel la première cartouche définit un filet micromaille de 100 µ et les premières billes définissent un diamètre de 5 mm ; et dans lequel la seconde cartouche définit un filet micromaille de 400 µ et les secondes billes définissent un diamètre compris entre 0,5 et 3 mm.

10. Appareil selon la revendication 3, dans lequel la première chambre de carbonatation est configurée pour recevoir le flux d'entrée mélangé à une pression de 1103161 Pa (160 livres par pouce carré (psi)) et à un débit de 5,6781 l/min (1,5 gallon par minute (GPM)).

11. Appareil selon la revendication 10, dans lequel l'appareil est configuré pour fournir de l'eau carbonatée à l'orifice de sortie de la seconde chambre de carbonatation à une pression de 448159 Pa (65 psi) et à un débit de 4,16394 l/min (1,1 gallon par minute (GPM)).

12. Appareil selon la revendication 3, comprenant en outre un appareil de mélange en communication fluidique avec le port d'entrée de la première chambre de carbonatation, l'appareil de mélange ayant un premier port d'entrée en communication avec une source d'eau pressurisée et réfrigérée, et un second port d'entrée en communication avec une source de dioxyde de carbone, l'appareil de mélange étant configuré pour mélanger l'eau et le dioxyde de carbone pour former le flux d'entrée avec des molécules d'eau et des molécules de dioxyde de carbone libres dans une solution aqueuse.

13. Appareil selon la revendication 12, dans lequel le premier port d'entrée du premier appareil de mélange est configuré pour recevoir l'eau pressurisée et réfrigérée à une pression de 620528 Pa (90 psi) et un débit de 6,81372 l/min (1,8 GPM) ; de préférence dans lequel le second port d'entrée de l'appareil de mélange est configuré pour recevoir le dioxyde de carbone à une pression de 517106 Pa (75 psi).

14. Appareil selon la revendication 1, dans lequel le premier filet micromaille est un filet micromaille métallique.

15. Appareil selon la revendication 1, dans lequel le premier filet micromaille a une configuration cylindrique.
